# EUROPEAN PATENT APPLICATION

(11) **EP 0 968 978 A1**
(43) Date of publication of application: **05.01.2000**
(21) Application number: 99110210.4
(22) Date of filing: 26.05.1999
(51) Int. Cl.: C04B 28/26

(54) **Concrete structure constructing method and concrete used therein**

(30) Priority: 26.05.1998 JP 14466698
(71) Applicant: FUJI CHEMICAL CO., LTD., Osaka 534-0025 (JP)
(72) Inventor: Watanabe, Mitsuyoshi, Sagamihara-shi, Kanagawa 229-1134 (JP); Tabata, Takashi, Machida-shi, Tokyo 194-0022 (JP); Onodera, Hiroshi, Nakatsugawa-shi, Gifu 509-9132 (JP)
(74) Representative: TER MEER STEINMEISTER & PARTNER GbR

(57) **Abstract**

To an unhardened concrete containing at least a cement, an aggregate and water, an alkali silicate is added in a weight ratio of from 0.2% to 5.0%, preferably from 0.2% to 2.0%, with respect to the cement on a solid content basis. The concrete containing the alkali silicate is placed into formwork as a temporary structure that confines the concrete to a predetermined shape and predetermined dimensions and supports the concrete until it attains suitable strength, thereby constructing a concrete structure. The amount of formwork materials used is reduced, and the operating efficiency and the physical properties of the concrete are improved.

## Description

### BACKGROUND OF THE INVENTION

### 1. Field of the Invention

The present invention relates to a material for concrete structures. More particularly, the present invention relates to a concrete structure constructing method using a concrete that contains a setting accelerator and allows its setting speed to be varied. The present invention also relates to a concrete used in the concrete structure constructing method.

### 2. Related Background Art

Concrete retains flowability and plasticity for a certain period of time but eventually sets into a solid mass of high strength. By virtue of such physical properties, concrete can be cast into formwork so as to set into a properly shaped solid mass. In addition, there is an abundance of material for concrete. Therefore, the material cost is favorably low. Thus, concrete is superior in both moldability and cost and hence used as a building structural material widely and in large quantities. Physical properties generally required for concrete are high flowability before placement and high hardening speed after placement.

To construct a structure by placing concrete, formwork is generally constructed by using sheathing and shoring. Unlike molding of a metal, a resin or the like, placing of concrete requires an operation in which formwork is constructed by using a large amount of formwork materials at a construction site. At a construction site, formwork made from plywood, concrete and so forth are carried in, and 30% of these materials must be finally carried out from the site.

As will be understood from the above, a great number of workers and a great deal of time are required for the operations of carrying in and out the materials and constructing and removing formwork. Consequently, the economical load is heavy, and the energy loss is large. Thus, the efficiency is unfavorably low. Therefore, it is desired to reduce the number of hours required for the operations of constructing and removing formwork. In addition, a large amount of lumber for formwork, which is difficult to use repeatedly, is used, and, at the same time, a large amount of waste material is produced. This is a serious problem from the viewpoint of the preservation of the natural environment.

To reduce the amount of formwork materials used, the rate at which formwork materials are rotationally used should be raised. To increase the efficiency of rotational use of formwork materials, the setting and hardening time of concrete should be shortened. However, it is well known that simply reducing the concrete setting and hardening time causes some problems to arise in operation.

If a sufficient working time for placing concrete is ensured, there will be no such problems as are caused by reducing the concrete setting and hardening time. However, when it is impossible to ensure a sufficient working time, problems arise. That is, it is impossible to perform placing, compacting or finishing satisfactorily. In particular, CSA cements cannot be used.

The lateral pressure applied to formwork by concrete placed therein does not lower to a considerable extent until setting starts. While concrete is liquid, the lateral pressure of the concrete against the formwork is equal to a value obtained by multiplying the specific gravity of concrete by the height as in the case of liquids such as water. The specific gravity of concrete is fixed at about 2.3. Therefore, the lateral pressure of concrete increases in proportion to the height.

There are cases where the sheathing boards rupture because the formwork cannot withstand the high lateral pressure, resulting in a serious accident. To reduce the lateral pressure to a markedly low level, it is most ideal to use a concrete mixed with a hardening accelerator for hardening the concrete immediately after it has been placed. However, a hardening accelerator that causes concrete to set immediately after placement considerably restricts the schedule of placing at a construction site and is therefore incapable of being used for general concrete structures in the present state of the art.

Regarding concretes generally used at construction sites to construct concrete structures, it is known that various physical properties, e.g. strength, durability, water resistance, and freeze-thaw resistance, vary according to the ratio of water to cement. It particular, it is known that when the amount of water added to cement exceeds a predetermined value, the concrete structure may crack by shrinkage. If the amount of water added to cement is reduced, the flowability of concrete degrades. To ensure the flowability required for concrete, water-reducing agents, e.g. surface-active agents, are often used. However, it is known that the use of such a water-reducing agent generally causes the setting time to lengthen undesirably.

In construction of concrete structures requiring particularly high strength, e.g. high-rise buildings, high-range water-reducing agents are used. Therefore, the setting time lengthens to a considerable extent. For this reason, even if concrete is placed in the morning, finishing operations such as plaster work cannot be carried out until late at night. This causes the operating efficiency to lower and also forces workers to work overtime.

In cold districts, the delay in setting of concrete causes water to remain in concrete without undergoing hydration with cement. This free water freezes, causing frost damage. Concrete damaged by freezing causes hardening failure by volume expansion. Therefore, concrete placed in the middle of winter needs an enormous amount of heating energy for control after concrete placement and thus requires a great deal of curing cost.

Considering the above, even more ideal physical properties required for concrete used to construct building structures are as follows: Concrete should have even more satisfactory flowability and plasticity before and after placing and retain a certain degree of plasticity even after the completion of the placing operation to allow a certain period of time for the placing operation so that placing can be carried out without severe timing restrictions. Meanwhile, concrete should have such physical properties that hardening starts rapidly after the period of time allowed has elapsed. Thus, concrete is required to have physical properties inconsistent with each other in a sense.

Regulated setting agents are known as admixtures used in view of hardening characteristics relating to such physical properties. Quick setting agents for cement, including calcium chloride and calcium aluminate quick setting agents, are known as agents for rapidly setting concrete materials. A cement such as ultra high-early-strength portland cement, which has a short setting time, is also used when it is desired to obtain high strength at early ages in winter or for the purpose of reducing the construction period.

As a setting accelerator for cement, sodium silicate is known, which is an alkali silicate added to concrete used at civil engineering work sites. There is known a construction method wherein a cement-sodium silicate grout is injected into the ground for the purpose of soft ground stabilization and spring water prevention. The ground grouting method is extensively carried out as water cut-off work when excavation is executed. Thus, it is widely known that an alkali silicate is usable as a quick setting agent for cement.

However, the above-described construction method utilizes the fact that sodium silicate reacts with calcium in cement to form a gel. The grout used in the construction method needs to have the property of penetrating into the ground and is therefore mixed with a large amount of water, i.e. 100% or more with respect to cement. For this reason, a set solid mass produced with such a composition shrinks extremely or crumbles when left in the air. Accordingly, the grout is not used as a building material or other structural material.

A cement-base inorganic material containing an alkali silicate is proposed in Japanese Patent No. 2652774. In the proposed cement-base inorganic material, an alkali silicate is used to perform a chemical reaction with a cementitious substance as a concrete component and also to prevent elution of glucide which would otherwise ooze out of woody parts when cement is mixed with a woody reinforcing material, e.g. wood chip, wood wool, or wood pulp.

Japanese Patent Application Unexamined Publication (KOKAI) No. 6-263499 proposes a concrete to which a quick setting agent is added, together with phosphonic acid as a retarder for the quick setting agent. It is stated in this publication that a quick setting agent is added in an amount of from 2 to 25% by weight with respect to cement and a mineral admixture, and a metal salt of silicic acid or the like is used as an example of the quick setting agent. However, it is unclear what kind of metal salt of silicic acid is used. If a quick setting agent alone is used in an amount within the range as proposed, the setting time of concrete is as short as from several seconds to several minutes. Therefore, phosphonic acid is added as a retarder.

Even if the retarder of phosphonic acid is used, the concrete sets within from several minutes to 20 minutes according to the slump test in the example (the test to measure the flowability of concrete using a slump cone). The concrete sets too rapidly to be used in building construction. Accordingly, the proposed concrete is a substitute for concrete used for spraying in construction of a tunnel or the like. Thus, the proposed concrete is only required to retain flowability for several tens of seconds to several tens of minutes, within which the freshly mixed concrete can be cast into formwork by a pump. Therefore, the proposed concrete cannot be used to construct general building structures.

Japanese Patent Application Unexamined Publication (KOKAI) No. 7-17749 proposes a fast-setting concrete to which a polycarboxylic acid and/or a polycarboxylate is added as a superplasticizer. It is stated in this publication that a quick setting agent is further added to the concrete in an amount of from 2 to 25% by weight with respect to cement and a mineral admixture, and a metal salt of silicic acid or the like is used as an example of the quick setting agent. However, it is unclear what kind of metal salt of silicic acid is used. The proposed concrete is also only required to retain flowability for several tens of seconds to several tens of minutes as in the case of the above-described proposition. Therefore, the proposed concrete cannot be used to construct general building structures.

### SUMMARY OF THE INVENTION

In view of the above-described background art, an object of the present invention is to provide a concrete structure constructing method using a concrete of high setting speed and also provide the concrete used in the concrete structure constructing method.

Another object of the present invention is to provide a concrete structure constructing method using a concrete which has a high setting speed and is capable of maintaining plasticity for a long period of time even after setting has started, and also provide the concrete used in the concrete structure constructing method.

Still another object of the present invention is to provide a concrete structure constructing method using a concrete whose hardening speed increases a certain period of time after the concrete has been placed, and also provide the concrete used in the concrete structure constructing method.

A further object of the present invention is to provide a concrete structure constructing method using a concrete which retains satisfactory flowability and plasticity for a certain period of time before and after concrete placement and whose hardening speed increases after a certain period of time allowed has elapsed, and also provide the concrete used in the concrete structure constructing method.

A still further object of the present invention is to provide a concrete structure constructing method which allows the physical properties of concrete at early ages to be improved by accelerating hydration so that the amount of formwork materials used is reduced and the operating efficiency is improved, and also provide the concrete used in the concrete structure constructing method.

A still further object of the present invention is to provide a concrete structure constructing method which allows the physical properties of concrete at early ages to be improved by accelerating hydration in construction of a concrete structure, and also provide the concrete used in the concrete structure constructing method.

A still further object of the present invention is to provide a concrete structure constructing method which allows setting of concrete to continue while retaining plasticity, and also provide the concrete used in the concrete structure constructing method.

The present invention provides a concrete structure constructing method wherein an alkali silicate is added to an unhardened concrete prepared by mixing together at least a cement, an aggregate and water, and the concrete containing the alkali silicate is placed into formwork as a temporary structure that confines the concrete to a predetermined shape and predetermined dimensions and supports the concrete until it attains suitable strength, thereby constructing a concrete structure.

In addition, the present invention provides a structural concrete consisting essentially of a mixture of at least a cement, an aggregate and water. An alkali silicate is added to the concrete before the concrete is hardened in a weight ratio of from 0.2% to 5.0%, preferably from 0.2% to 2.0%, with respect to the cement on a solid content basis.

The feature of the concrete structure constructing method and concrete according to the present invention resides in that a setting accelerator is used to accelerate setting of the concrete. The setting accelerator is used at the time of placing concrete. The setting accelerator contains a gel particle-forming agent for forming gel particles in a water atmosphere. The setting accelerator is an alkali silicate that forms gel particles.

The term "cement" as used in the present invention means mineral binders such as portland cement, portland blast-furnace slag cement, portland fly-ash cement, portland pozzolan cement (silica cement), and high alumina cement, which harden by admixing with water. Blended cements are also usable in the present invention, which are produced by mixing the above-mentioned cements with mineral admixtures such as silica fume, silica, fly ash and slag. The term "aggregate" as used in the present invention means particulate materials such as sand, gravel, and crushed stone, which are called "coarse aggregates" and "fine aggregates" in terms of the particle size. As to water, ordinary fresh water with a low impurity content is used. Accordingly, the concept of "concrete" in the present invention covers both an unhardened cement concrete formed by mixing together a cement, water, and an aggregate, and an unhardened cement mortar consisting essentially of a cement, sand, and water.

The alkali silicate used in the present invention is a compound consisting of silicon dioxide and a metallic oxide, which is harmless and does not cause a rise in cost. The alkali silicate is soluble in water and forms a coarse gel particle membrane in a water atmosphere present when the concrete is placed. The gel particle membrane is not a layer that encloses a micro-space but a layer, crystal or network that does not enclose a micro-space. The gel particle membrane is a layer three-dimensionally distributed and dispersed in particulate or insular form to surround loosely the micro-space or cement particles in the micro-space. Thus, the gel particle membrane is a gel that forms a kind of permeable membrane, which is readily permeable to water but retains the plasticity of the cement particle aggregate. Accordingly, many gaps through which water can penetrate are formed between the gel particles.

The number of gaps depends on the density distribution and degree of dispersion of the gal particles. The density distribution and degree of dispersion depend on the mixing ratio of the gel particle-forming agent, which in turn depends on the molar ratio of an alkali to silicic acid in the alkali silicate. The effective molar ratio is within the range of from 1:0.5 to 1:8, preferably within the range of from 1:2 to 1:4. The alkali silicate includes one or more selected from the group consisting of sodium silicate (Na₂O·nSiO₂·mH₂O), potassium silicate (K₂O·nSiO₂·mH₂O), lithium silicate (Li₂O·nSiO₂·mH₂O), cesium silicate (Cs₂O·nSiO₂·mH₂O), rubidium silicate (Rb₂O·nSiO₂·mH₂O), and quaternary ammonium silicate (R₄N·nSiO₂·mH₂O, where R is an alkyl group). In the formulas, n is a molar ratio, and R is an alkyl group. It is particularly preferable for the alkali silicate to include at least one selected from among potassium silicate and sodium silicate.

Known alkali silicates include anhydrous glass, those which contain water in the crystals (water of hydration), and those which are in the form of aqueous solutions, e.g. liquid sodium silicate (Japanese Industrial Standard JIS-1408). In the present invention, it is possible to use any of these known alkali silicates, exclusive of anhydrous glass, which is insoluble in water. It is preferable that the alkali silicate should be added to the concrete in a weight ratio of from 0.2% to 5.0% with respect to the cement, which is the principal component, on a solid content basis. It is even more desirable that the alkali silicate should be added to the concrete in a weight ratio of from 0.2% to 2.0% with respect to the cement, which is the principal component, on a solid content basis. The above-described range for accelerating the setting of concrete does not negatively mean that if the amount of alkali silicate added exceeds 2.0%, the effectiveness reduces, but it positively means that the setting accelerating effect is exhibited remarkably by adding the alkali silicate in a very small quantity, i.e. 0.2%. It should, however, be noted that the above-described amounts of alkali silicate added are those with respect to the amount of cement containing no mineral admixture.

The concrete according to the present invention not only allows the concrete setting time to be reduced by using an alkali silicate as a concrete setting accelerator but also provides the following advantageous effect. That is, setting accelerators for concrete that are used at present suffer a short pot-life. Therefore, concrete becomes incapable of being cast into formwork shortly after the start of hardening. In contrast, the concrete according to the present invention has the advantageous feature that it maintains plasticity for a while even after the start of hardening. Consequently, the time period for placing can be lengthened, and therefore the operating efficiency increases remarkably.

Generally speaking, it is preferable for concrete to have flowability and plasticity before and after placing concrete. Because water penetrates through the gaps between the gel particles, the presence of the gel particles causes the flowability of water to be lost. However, because the gel particles continue to pass water over a long period of time, the hardening time is shortened in view of the long time period until the completion of hardening. That is, hydration, which is the main process in the hardening reaction, is not retarded with a long time interval. In other words, the gel particles do not obstruct hydration.

Accordingly, it is rather preferable for the concrete according to the present invention that the hardening starting time should be retarded by combining the concrete with various setting retarders, which retard the setting of cement. As setting retarders for retarding the setting of cement, it is possible to use known setting retarders, e.g. organic lignin sulfonates, gluconates, polyols, and inorganic silicofluorides. In addition, admixtures including a dispersant, a surface-active agent, and so forth, which are known as "water-reducing agents", are used to improve the flowability of ready-mixed concrete, i.e. consistency and workability, when the dosage of water is small. Some water-reducing agents act as setting retarders for retarding the setting of cement. Therefore, in the present invention, water-reducing agents having such a feature are used also as setting retarders.

If a setting retarder and an alkali silicate are added simultaneously to unhardened concrete, flowability is retained even more strongly in an initial process of the setting of the concrete. In the setting process at the middle and late stages, where the flowability lowers, the setting accelerating effect of the alkali silicate is exhibited rapidly. After all, the setting time taken to the final process will not lengthen. A setting retarder that is commercially available and generally used should preferably be added to the concrete in a weight ratio of from 0.2% to 2.0% with respect to the cement on a solid content basis. It should be noted that the above-described amount of the setting retarder is the dosage with respect to the amount of cement containing no mineral admixture.

It should be noted that alkali silicates per se have the property of retaining flowability at initial stages and increasing the setting speed rapidly after the period of time during which the flowability is retained has elapsed. With this property, alkali silicates act in the same way as retarders. Thus, a retarder and an alkali silicate exhibit their similar properties synergistically, thereby allowing the relationship between setting and flowability to be controlled in terms of time as desired. In this case, it is generally preferable to add the retarder in advance of the addition of the alkali silicate.

The hardening time shortens in the long run, and timely placing is carried out. Consequently, it is possible to reduce the amount of formwork materials used at the time of construction, and it is also possible to improve the operating efficiency in construction of a concrete structure. The amount of shoring materials used also reduces. It has been confirmed at the laboratory level that the proofness against the damage by freezing of concrete structures at early ages improves remarkably.

Thus, the concrete structure constructing method and concrete according to the present invention have advantages in that the setting speed is fast, and yet the plasticity retaining time is favorably long, and that the hydration hardening reaction proceeds rapidly after a predetermined period of time has elapsed, and further that the time period and schedule of placing work can be set freely by the above-described setting speed control.

The above and other objects, features and advantages of the present invention will become more apparent from the following description of the preferred embodiments thereof, taken in conjunction with the accompanying drawings.

### BRIEF DESCRIPTION OF THE DRAWINGS

Fig. 1 is a diagram showing X-ray diffraction patterns of specimens immediately after the preparation of the specimens.
Fig. 2 is a diagram showing X-ray diffraction patterns of specimens 24 hours after the preparation of the specimens.
Fig. 3 is a diagram showing X-ray diffraction patterns of other specimens 24 hours after the preparation of the specimens.
Fig. 4 is a scanning electron micrograph of a specimen before addition of water.
Fig. 5(a) and Fig. 5(b) are scanning electron micrographs of a specimen and a comparative example immediately after addition of water.
Fig. 6(a) and Fig. 6(b) are scanning electron micrographs of a specimen and a comparative example 2 hours after addition of water.
Fig. 7(a) and Fig. 7(b) are scanning electron micrographs of a specimen and a comparative example 24 hours after addition of water.

### DESCRIPTION OF THE PREFERRED EMBODIMENTS

It is preferable that the concrete structural material according to the present invention should use an alkali silicate as a gelling agent, which is a setting accelerator, in construction of a concrete structure. Shortening the setting time allows formwork materials to be used repeatedly. Consequently, it is possible to reduce the amount of formwork materials used. In addition, the setting accelerating effect of the alkali silicate permits the lateral pressure against sheathing to reduce or become zero early after concrete placement. Accordingly, it is possible to reduce the amount of shoring materials used.

JASS 5 (Japanese Architectural Standard Specification for Reinforced Concrete Work; Architectural Institute of Japan) specifies the time for formwork to remain in place as follows: The time for sheathing to remain in place for foundations, beam sides, columns and walls shall be the period required for the concrete to attain a compressive strength of at least 5 N/mm². In the case of type B portland blast-furnace slag cement (Japanese Industrial Standard) by way of example, the time for formwork as a temporary structure to remain in place is 5 days at 20°C or higher and 8 days at a temperature lower than 20°C and not lower than 10°C. According to the present invention, the time for formwork to remain in place can be reduced to about 5 hours at 20°C or higher and to about 12 hours at a temperature lower than 20°C and not lower than 10°C.

In other words, it is possible to accelerate the rise of the early age strength remarkably and to attain a compressive strength of at least 5 N/mm² in in a short period of time. As has been stated above in connection with the prior art, while placed concrete is liquid, the lateral pressure against sheathing becomes higher as the height increases. According to the method of the present invention, however, an appropriate operating time can be ensured, and yet the lateral pressure against sheathing reduces rapidly because setting starts quickly after concrete placement.

In construction of concrete structures requiring particularly high strength, e.g. high-rise buildings, high-range water-reducing agents are used. The high-range water-reducing agents have a great retarding effect on the setting of concrete. When such an admixture is added to concrete, setting of the concrete after placing is retarded to a considerable extent. For this reason, even if concrete is placed in the morning, finishing operations such as plaster work cannot be carried out until late at night. This causes the operating efficiency to lower. According to the present invention, the lowering of the operating efficiency can be bettered by the setting accelerating effect.

It is generally understood that when cement and water react with each other, calcium sulfate contained in the cement reacts with the surfaces of particles of calcium silicate or aluminate, which is a hydration component of the cement, to form a dense protecting membrane, thereby suppressing the hydration. However, when an alkali silicate is used as a setting accelerator, a silicate or silicate-base gel membrane with a coarser structure than that formed by calcium sulfate is formed on the surfaces of the particles. Accordingly, penetration of water into the insides of the cement particles is promoted, and thus hydration of the cement itself is accelerated. Therefore, formwork can be removed at an early stage after concrete placement. Moreover, because the amount of unreacted void water reduces, the proofness against the damage by freezing of the concrete structure at early ages can be improved remarkably.

On the other hand, setting accelerators generally used as quick setting agents for cement, e.g. calcium chloride and calcium aluminate, cause the setting reaction to proceed too quickly. Consequently, the flowability of mortal is lost early. Therefore, it is difficult to perform placing. However, when an alkali silicate is used as a setting accelerator, even after setting reaction has started, the concrete has thixotropic properties and is therefore capable of being cast into formwork.

In other words, it is necessary in order to obtain the above-described action to use an alkali silicate as a setting accelerator. The alkali silicate used as a setting accelerator in the present invention contains an alkali and silicic acid in a molar ratio of from 1:0.5 to 1:8 and is one or more selected from the group consisting of sodium silicate (Na₂O·nSiO₂·mH₂O), potassium silicate (K₂O·nSiO₂·mH₂O), lithium silicate (Li₂O·nSiO₂·mH₂O), cesium silicate (Cs₂O·nSiO₂·mH₂O), rubidium silicate (Rb₂O·nSiO₂·mH₂O), and quaternary ammonium silicate (R₄N·nSiO₂·mH₂O, where R is an alkyl group), exclusive of those which are in anhydrous glass form. These alkali silicates may be used alone or in the form of a mixture of two or more of them.

In view of availability and economy, it is particularly desirable to use sodium silicate or potassium silicate in which the alkali/silicic acid molar ratio is from 1:2 to 1:4. These alkali silicates are used in the form of powder obtained by drying an aqueous solution of liquid sodium silicate (JISK-1408; Japanese Industrial Standard), for example, by spray drying or other similar method, and water-containing crystals. The reason for this is as follows. From the viewpoint of the reactivity with cement and the solubility in water, it is preferable to use an aqueous solution, dry powder, and crystals that are relatively readily soluble in water, e.g. sodium metasilicate. That is, alkali silicates, exclusive of anhydrous glass, are desirable to use.

When used as a setting accelerator in construction of a concrete structure, an alkali silicate should preferably be added to the concrete in a weight ratio of from 0.2% to 5.0%, more preferably from 0.2% to 2.0%, with respect to the cement on a solid content basis.

An amount of alkali silicate below the above-described range does not provide a satisfactory setting accelerating effect. Even if the alkali silicate is added in excess of the above-described range, there is no change in the setting accelerating effect. The alkali silicate may be added at the same time as the concrete is mixed. For the purpose of adjusting the setting time of concrete using a water-reducing agent having a strong retarding effect, for example, the alkali silicate may be admixed with the concrete at a construction site after a cement, an aggregate and water have been mixed together, thereby using the alkali silicate to control the setting starting time.

### Physical and Chemical Estimation of Setting Acceleration

The following is a hypothetic estimation for explaining experimental results. In comparative examples, calcium sulfate contained in cement particles physicochemically bonds to the surfaces of particles of calcium silicate or aluminate contained in the cement particles as a hydration component of the cement to form three-dimensional membranes of calcium sulfate particles. The membranes are spherical membranes and spherical networks.

Such membranes and networks form permeable membranes that are dense and hence slightly permeable to water. The denseness of the permeable membranes may be considered to be a physicochemical factor that makes the membranes slightly permeable to water. At the same time, it cannot be denied that there is a possibility of the membranes having electrical repellence to water. In contrast, the gel particles in the present invention form membranes having a large mesh size and permit water to be flowable over a long period of time while suppressing flowing of water. Accordingly, the gel particles retain plasticity and flowability well at early stages of the process but increase the setting speed for the entire process from the starting of setting until the concrete sets.

In an embodiment of the present invention, the alkali silicate as a setting accelerator per se forms gel particles in water and loosely bonds or freely floats around the cement particles to form coarse membranes and networks around the cement particles. The membranes and networks form permeable membranes that are coarse and hence readily permeable to water. The coarseness of the membranes may be considered to be a physicochemical factor that makes the membranes readily permeable to water. At the same time, it cannot be denied that there is a possibility of the membranes having electrical attraction for water. It is also conceivable that the cement particles are coagulated by the hydrogen bond between the membranes, but the coagulation structures are destroyed by external force such as vibrations; therefore, the concrete has thixotropic properties.

In the comparative examples, it is estimated that although the hydration speed is slow, the cement particles are covered with dense membranes and thus their relative movement is restricted, and when the hydration proceeds even slightly, the flowability and plasticity are lost rapidly. In the embodiment of the present invention, it is estimated that because of their hydrating properties and high mobility, the gel particles raise the mobility of the cement particles and allow the flowability and plasticity thereof to continue to be retained. Furthermore, in the embodiment of the present invention, it is estimated that even when water penetrates through the membranes and thus the setting reaction by hydration of the cement particles with water is accelerated, the flowability and plasticity are retained as long as the gel state of the gel particles is maintained.

### [Example 1]

The mix of concrete tested was as follows: The water-cement ratio was 40% (weight ratio); the unit cement content was 400 kg/m³; the sand aggregate ratio was 45% (weight ratio); the setting retarder-cement ratio was 0.04% (weight ratio); the amount of powdered sodium silicate with an SiO₂/Na₂O molar ratio of 3.2 was 4 kg; and the high-range water-reducing agent-cement ratio was 0.5% (weight ratio). The temperature of freshly mixed concrete was 20°C. After mixing, the concrete was placed into formwork. The time required for the concrete to become capable of being actually removed from the formwork after placing was 2 hours. A concrete having the same mix was prepared so that the temperature of freshly mixed concrete was 5°C. The time required for this concrete to become capable of being actually removed from formwork was 3 hours. As the setting retarder, a glucide organic substance is usually used (Trade Name: Binsol R, manufactured by Yamaso Kagaku).

### [Comparative Example 1]

A concrete was prepared with the same mix proportions as the above except that powdered sodium silicate was not used. In this case, the time required for the concrete to become capable of being removed from formwork was about 24 hours at a freshly mixed concrete temperature of 20°C and about 48 hours at a freshly mixed concrete temperature of 5°C. Therefore, it has become clear that when powdered sodium silicate is used as a setting accelerator, the initial hardening time is reduced to 1/12 to 1/16, which leads to a remarkable improvement in efficiency.

### [Example 2]

The amount of shoring materials required for placing a concrete prepared with the same mix proportions as in Example 1 was favorably reduced to 0.036 m² in terms of the form-requiring area per sequence of concrete placing for footing beams, beams and walls. Considering the repeated use of shoring materials for this form-requiring area, construction can be executed with this amount of formwork materials. In this case, however, the construction efficiency is unfavorably low. If an amount of formwork materials 5 to 10 times as much as 0.036 m² (about 2 kg in terms of the weight) is prepared, construction can be executed smoothly.

### [Comparative Example 2]

A concrete was prepared with the same mix proportions as in Example 2 except that sodium silicate was not used. In this case, an amount of shoring materials corresponding to the formwork area for one story of a building was needed. On the average, the number of sheathing boards for an area about 4 times the floor area of each story was needed. Regarding shoring for supporting sheathing, about 80 kg of shoring materials was needed per square meter of footing beams, beams and walls. Thus, about 4×80 kg of shoring materials was needed for the floor area of each story. The shoring materials can be used repeatedly for each story. However, the shoring materials must be carried out, cleaned and carried in so as to be used for another story. Accordingly, an enormous amount of transportation energy is required for the repeated use of the shoring materials, resulting in a rise in the cost.

### [Example 3]

The mix of concrete tested was as follows: The water-cement ratio was 40% (weight ratio); the unit cement content was 400 kg/m³; the sand aggregate ratio was 45% (weight ratio); the setting retarder-cement ratio was 0.04% (weight ratio); the amount of powdered sodium silicate with an SiO₂/Na₂O molar ratio of 3.2 was 4 kg; and the high-range water-reducing agent-cement ratio was 0.5% (weight ratio). The temperature of freshly mixed concrete was 20°C. After mixing, the concrete was placed. The time required for the concrete to become capable of undergoing actual plaster work after placing was 1 hour. A concrete having the same mix was prepared so that the temperature of freshly mixed concrete was 5°C. The time required for this concrete to become capable of undergoing actual plaster work after placing was 1.5 hours.

### [Comparative Example 3]

A concrete was prepared in the same way as in Example 3 except that powdered sodium silicate was not used. In this case, the time required for the concrete to become capable of undergoing actual plaster work after placing was about 5 hours at a freshly mixed concrete temperature of 20°C and about 9 hours at a freshly mixed concrete temperature of 5°C. Accordingly, it has become clear that the time required for the concrete to become capable of undergoing plaster work is reduced to 1/5 to 1/6, which leads to a remarkable improvement in efficiency.

### [Example 4]

The mix of concrete tested was as follows: The water-cement ratio was 40% (weight ratio); the unit cement content was 400 kg/m³; the sand aggregate ratio was 45% (weight ratio); the setting retarder-cement ratio was 0.04% (weight ratio); the amount of powdered sodium silicate with an SiO₂/Na₂O molar ratio of 3.2 was 4 kg; and the high-range water-reducing agent-cement ratio was 0.5% (weight ratio). The temperature of freshly mixed concrete was 5°C. After mixing, the concrete was placed. Immediately thereafter, the concrete was forcedly frozen in an atmosphere of -10°C. There was no damage by freezing of the concrete at early ages.

The conceivable reasons for this are that the freezing temperature of free water in the concrete was lowered by addition of sodium silicate, and that before the concrete of 5°C lowered to the freezing temperature, the cement and water already reacted with each other and hence there was no free water to freeze.

### [Comparative Example 4]

A concrete was prepared in the same way as in Example 4 except that powdered sodium silicate was not used. The concrete placed outside at -10°C was thawed by leaving it in a room at 20°C. As a result, the concrete crumbled and did not harden again.

### [Experimental Data]

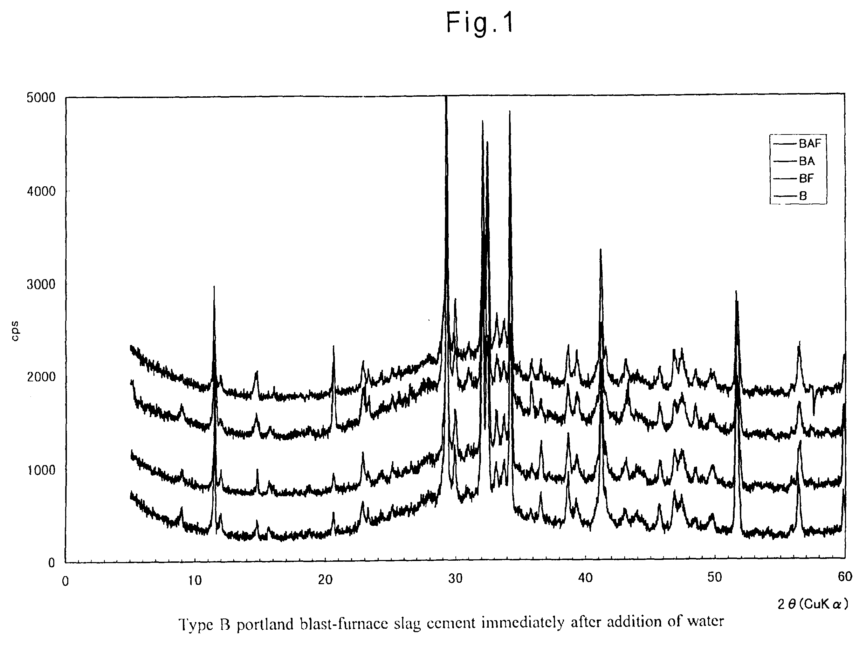

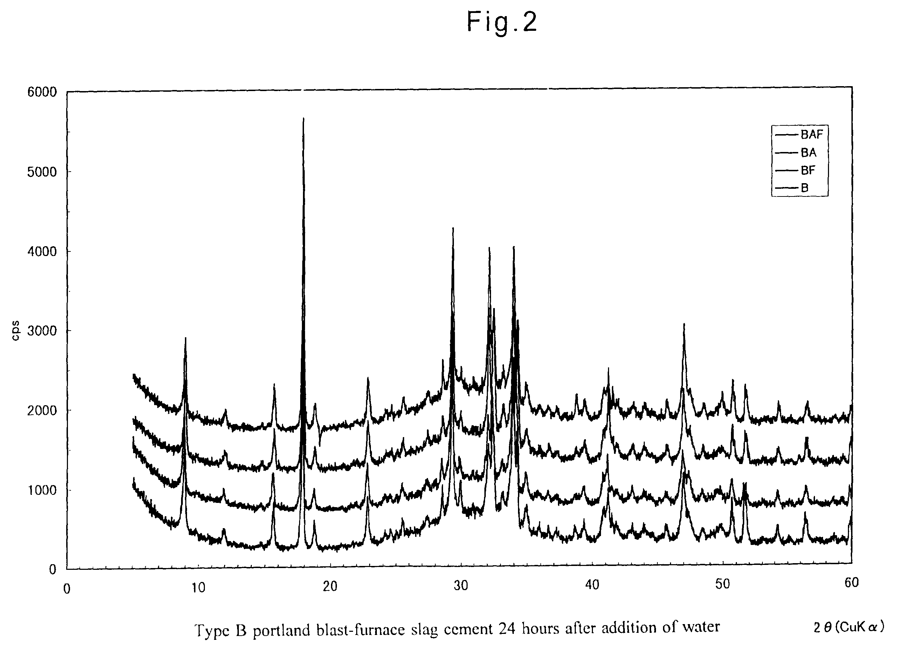

Figs. 1 and 2 show spectra obtained by X-ray diffraction of type B portland blast-furnace slag cement (Japanese Industrial Standard). In these figures, the abscissa axis shows the angle, and the ordinate axis shows the amounts of substances present. Angle positions correspond to substances. For example, the positions of 11.6 degrees and 20.7 degrees correspond to calcium dihydrosulfate. Fig. 1 shows diffraction patterns obtained immediately after water was added to type B portland blast-furnace slag cement. Fig. 2 shows diffraction patterns obtained 24 hours after water was added to type B portland blast-furnace slag cement. Specimens BAF, BA, BF and B in the figures are as follows:

### Specimen BAF:

To water of specimen B, 1.1 g of powdered sodium silicate No. 3 and 0.55 g of the above-described water-reducing agent were added.

### Specimen BA:

To specimen B, 0.55 g of a naphthalenesulfonic acid water-reducing agent (Mighty 21VS, manufactured by Kao Corporation, Japan) was added as a retarder.

### Specimen BF:

To water of specimen B, 1.1 g of powdered sodium silicate No. 3 was added.

### Specimen B:

To 110 g of type B portland blast-furnace slag cement, 44 g of water was added.

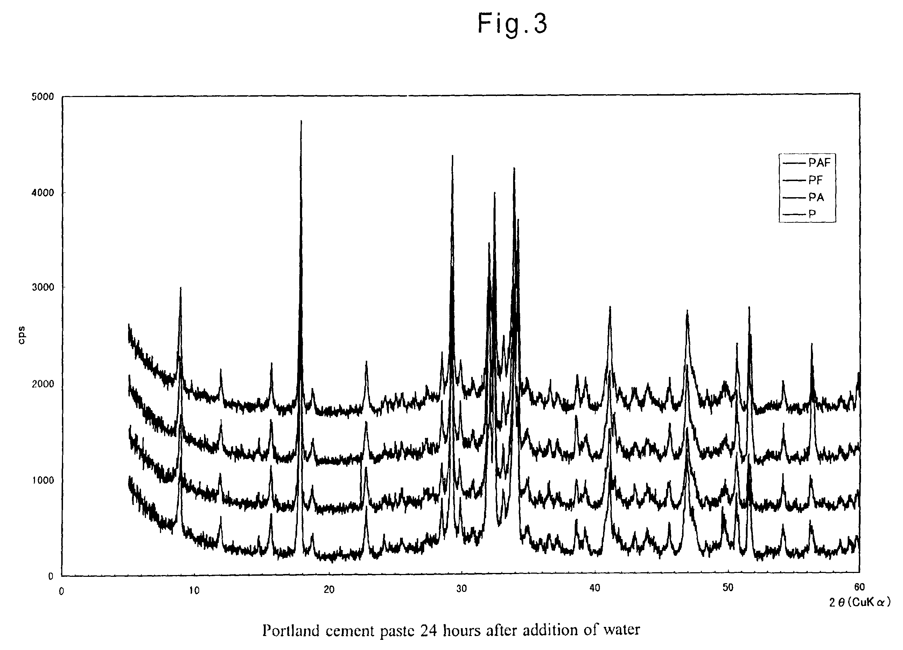

Fig. 3 shows diffraction patterns obtained 24 hours after water was added to ordinary portland cement. Specimens PAF, PA, PF and P in the figure are as follows:

### Specimen PAF:

To water of specimen P, 1.1 g of powdered sodium silicate No. 3 and 0.55 g of the above-described water-reducing agent were added.

### Specimen PA:

To specimen P, 0.55 g of a naphthalenesulfonic acid water-reducing agent (Mighty 21VS, manufactured by Kao Corporation, Japan) was added as a retarder.

### Specimen PF:

To water of specimen P, 1.1 g of powdered sodium silicate No. 3 was added.

### Specimen P:

To 110 g of ordinary portland cement, 44 g of water was added.

These specimens were all prepared by mixing each admixture after addition of water and applying each slurry immediately after the mixing process to a glass cell. As will be understood from the results of X-ray diffraction shown in Fig. 1, specimens BAF and BF with powdered sodium silicate added thereto have small peak values in the vicinity of 11.6 degrees and in the vicinity of 20.7 degrees. This means that there was produced a relatively small amount of calcium dihydrosulfate (gypsum dihydrate), which is said to form a dense hydration membrane on the surfaces of cement particles and to retard the cement hydration process.

As will be understood from the results of X-ray diffraction 24 hours after the addition of water shown in Fig. 2, there was almost no difference between the specimens having sodium silicate added thereto and those which were not admixed with sodium silicate 24 hours after the addition of water. This means that in the specimens having sodium silicate added thereto, hardening by hydration was accelerated earlier than in the specimens which were not admixed with sodium silicate. The same is the case with ordinary portland cement, as shown in Fig. 3.

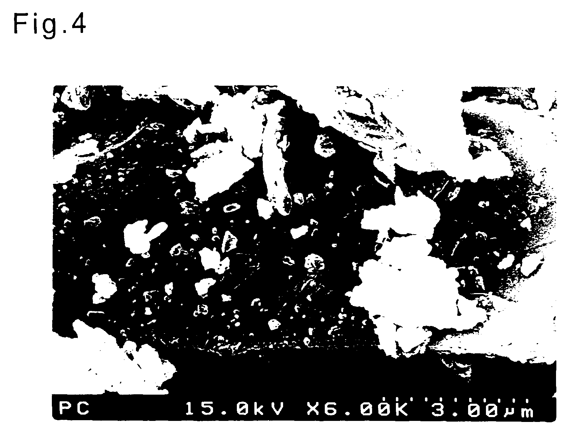

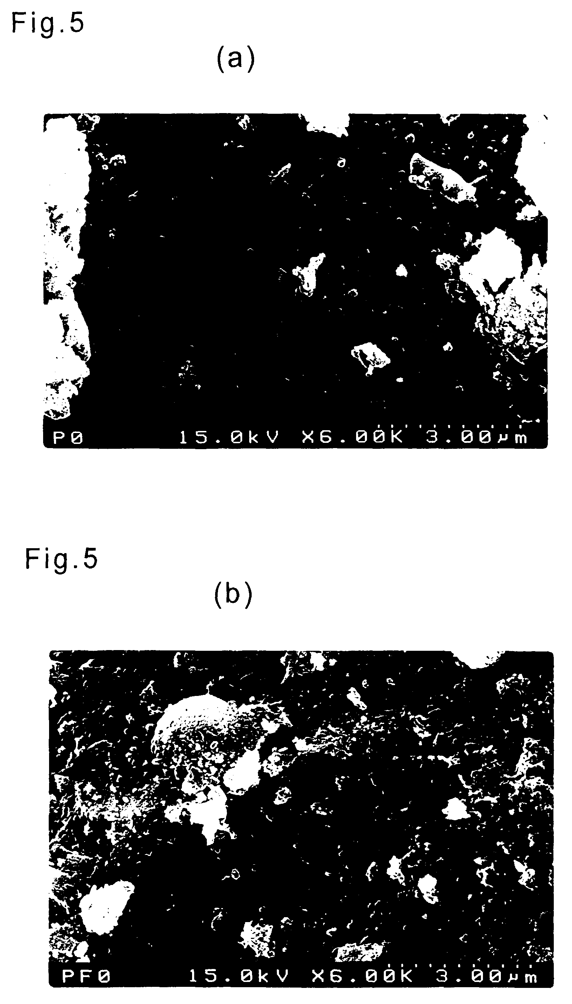

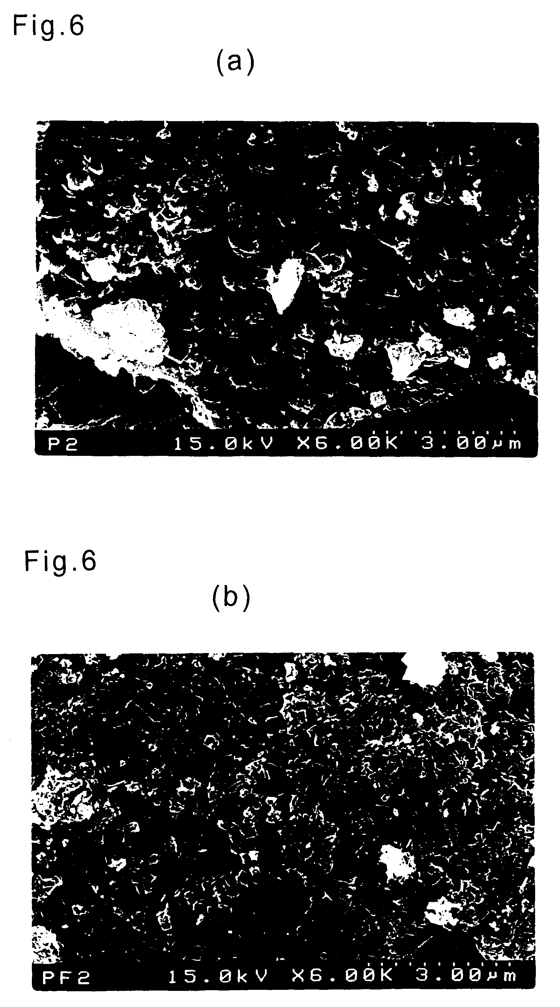

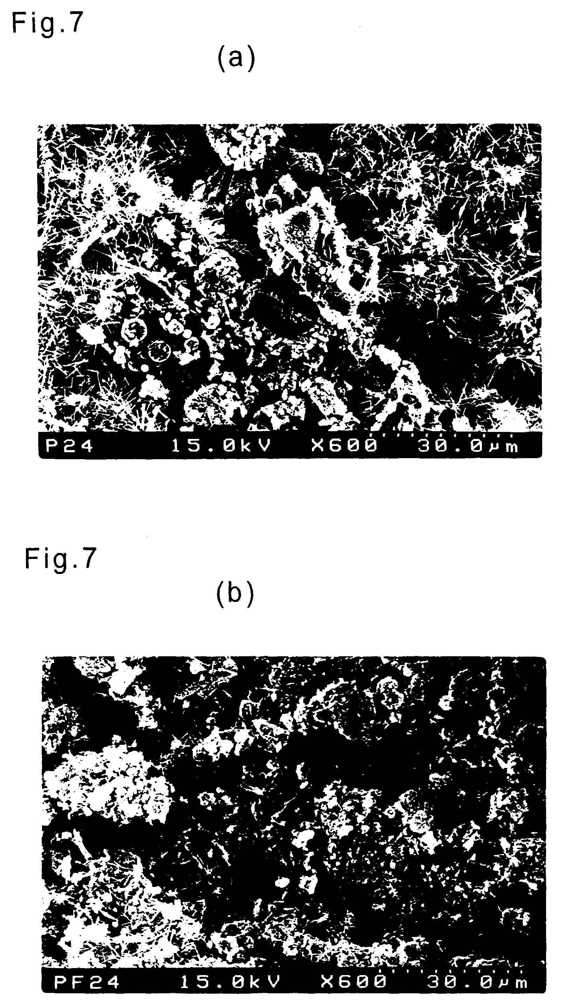

Fig. 4 is a scanning electron micrograph of ordinary portland cement. Fig. 5(a) is a scanning electron micrograph of a specimen P0 vacuum-dried at ordinary temperatures on a glass cell immediately after the specimen P0 had been prepared by adding 44 g of water to 110 g of ordinary portland cement. Fig. 5(b) is a scanning electron micrograph of a specimen PF0 prepared by adding 1.1 g of powdered sodium silicate No. 3 to the water of the specimen P0. Fig. 6(a) is a scanning electron micrograph of a specimen P2 vacuum-dried at ordinary temperatures on a glass cell 2 hours after the specimen P2 had been prepared by adding 44 g of water to 110 g of ordinary portland cement. Fig. 6(b) is a scanning electron micrograph of a specimen PF2 prepared by adding 1.1 g of powdered sodium silicate No. 3 to the water of the specimen P2. Fig. 7(a) is a scanning electron micrograph of a specimen P24 vacuum-dried at ordinary temperatures on a glass cell 24 hours after the specimen P24 had been prepared by adding 44 g of water to 110 g of ordinary portland cement. Fig. 7(b) is a scanning electron micrograph of a specimen PF24 prepared by adding 1.1 g of powdered sodium silicate No. 3 to the water of the specimen P24.

It will be understood by a comparison of Figs. 5(a) and 5(b) that in the specimen PF0 in Fig. 5(b), which contained powdered sodium silicate, hydration had already started immediately after the addition of water and proceeded at a higher rate than in the case of the specimen P0, which is shown in Fig. 5(a). It will be understood by a comparison of Figs. 6(a) and 6(b) that in the specimen PF2 in Fig. 6(b), which contained powdered sodium silicate, the hydration had proceeded at an even higher rate than in the case of the specimen P2, which is shown in Fig. 6(a), 2 hours after the addition of water. It will be understood by a comparison of Figs. 7(a) and 7(b) that after 24 hours had elapsed, the specimen PF24, which contained powdered sodium silicate, and the specimen P24, which contained no powdered sodium silicate, were in almost the same hydration proceeding condition. This experiment shows the same results as in the X-ray diffraction. That is, the results of the two experiments show that in the product of the present invention, hydration proceeds rapidly at initial stages of the reaction.

The present invention provides the following remarkable effects:

The setting time is favorably reduced. The concrete maintains plasticity even after setting has started. Consequently, as a secondary effect, it becomes possible to use formwork materials repeatedly. In addition, the lateral pressure applied to formwork by concrete after placement reduces. Consequently, the amount of shoring materials can be reduced. Thus, it is possible to markedly reduce the amount of formwork materials used, which have heretofore been carried in and out of a construction site in large quantities. Therefore, as a secondary effect, it is possible to reduce the energy for transportation required for carrying in and out formwork materials and the energy for assembling and disassembling formwork. This makes it possible to reduce the consumption of valuable natural resources such as lumber, which is generally used as a formwork material. It is also possible to reduce the amount of waste material. Accordingly, it is possible to better the global-scale environmental issues.

As a secondary effect, it is possible to control the setting time by combining the present invention with the setting retarding effect, which is produced when a water-reducing agent is used. Accordingly, the operating efficiency can be improved to a considerable extent. Furthermore, under cold conditions, the freeze-thaw resistance at early ages is improved to a considerable extent by accelerating the hydration of cement.

It should be noted that the present invention is not necessarily limited to the foregoing embodiments but can be modified in a variety of ways without departing from the gist of the present invention.

## Claims

1. A concrete structure constructing method comprising the steps of:
adding an alkali silicate to an unhardened concrete prepared by mixing together at least a cement, an aggregate and water; and
placing said concrete containing said alkali silicate into formwork as a temporary structure that confines said concrete to a predetermined shape and predetermined dimensions and supports said concrete until said concrete attains suitable strength, thereby constructing a concrete structure.

2. A concrete structure constructing method according to claim 1, wherein said alkali silicate contains an alkali and silicic acid in a molar ratio of from 1:0.5 to 1:8 and is at least one selected from the group consisting of sodium silicate (Na₂O·nSiO₂·mH₂O), potassium silicate (K₂O·nSiO₂·mH₂O), lithium silicate (Li₂O·nSiO₂·mH₂O), cesium silicate (Cs₂O·nSiO₂·mH₂O), rubidium silicate (Rb₂O·nSiO₂·mH₂O), and quaternary ammonium silicate (R₄N·nSiO₂·mH₂O, where R is an alkyl group).

3. A concrete structure constructing method according to claim 1 or 2, wherein said alkali silicate is added to said concrete in a weight ratio of from 0.2% to 5.0% with respect to said cement on a solid content basis.

4. A concrete structure constructing method according to claim 1 or 2, wherein said alkali silicate is added to said concrete in a weight ratio of from 0.2% to 2.0% with respect to said cement on a solid content basis.

5. A concrete structure constructing method according to claim 1 or 2, wherein a setting retarder is added to said concrete in a weight ratio of from 0.5% to 2.0% with respect to said cement on a solid content basis, and
wherein a period of time required for said concrete to attain a compressive strength of at least 5 N/mm² is from 4 to 6 hours as expressed by a median at an environmental temperature of not lower than 20°C.

6. A concrete structure constructing method according to claim 5, wherein said alkali silicate is added to said concrete after said setting retarder has been added to said concrete.

7. A structural concrete consisting essentially of a mixture of at least a cement, an aggregate and water, which is to be placed into formwork as a temporary structure that confines said concrete to a predetermined shape and predetermined dimensions and supports said concrete until said concrete attains suitable strength,
wherein an alkali silicate is added to said concrete before said concrete is hardened in a weight ratio of from 0.2% to 5.0% with respect to said cement on a solid content basis.

8. A structural concrete consisting essentially of a mixture of at least a cement, an aggregate and water, which is to be placed into formwork as a temporary structure that confines said concrete to a predetermined shape and predetermined dimensions and supports said concrete until said concrete attains suitable strength,
wherein an alkali silicate is added to said concrete before said concrete is hardened in a weight ratio of from 0.2% to 2.0% with respect to said cement on a solid content basis.

9. A structural concrete according to claim 7 or 8,
wherein said alkali silicate is at least one selected from the group consisting of sodium silicate (Na₂O·nSiO₂·mH₂O), potassium silicate (K₂O·nSiO₂·mH₂O), lithium silicate (Li₂O·nSiO₂·mH₂O), cesium silicate (Cs₂O·nSiO₂·mH₂O), rubidium silicate (Rb₂O·nSiO₂·mH₂O), and quaternary ammonium silicate (R₄N·nSiO₂·mH₂O, where R is an alkyl group).

10. A structural concrete according to claim 7 or 8,
wherein a setting retarder is added to said concrete in a weight ratio of from 0.5% to 2.0% with respect to said cement on a solid content basis.
